# FASCICULE DE BREVET EUROPEEN

(11) **EP 3 126 594 B1**
(45) Date de publication et mention de la délivrance du brevet: **28.08.2019**
(21) Numéro de dépôt: 15719795.5
(22) Date de dépôt: 02.04.2015
(51) Int. Cl.: E04H 4/16

(54) **APPAREIL NETTOYEUR DE PISCINE À DISPOSITIF DE FILTRATION EXTRACTIBLE**
SCHWIMMBECKENREINIGUNGSVORRICHTUNG MIT EXTRAHIERBARER FILTRIERUNGSVORRICHTUNG
SWIMMING-POOL-CLEANING APPARATUS WITH EXTRACTABLE FILTRATION DEVICE

(30) Priorité: 04.04.2014 FR 1453023
(43) Date de publication de la demande: 08.02.2017
(73) Titulaire: Zodiac Pool Care Europe, 69500 Bron (FR)
(72) Inventeur: BLANC TAILLEUR, Philippe, F-31400 Toulouse (FR); MUNOZ, Faustine, F-69200 Venissieux (FR); PICHON, Philippe, F-31800 Villeneuve de Rivière (FR)
(74) Mandataire: Ipside
(86) Numéro de dépôt international: PCT/FR2015/050868
(87) Numéro de publication internationale: WO 2015/150710

(56) Documents cités:
- EP-A2- 1 905 925
- FR-A1- 2 925 557
- US-A- 5 941 586

## Description

La présente invention relève du domaine des équipements pour piscines. Elle concerne plus particulièrement un appareil de nettoyage de piscine à dispositif de nettoyage du filtre sans que l'utilisateur doive se salir les mains.

### Préambule et art antérieur

L'invention concerne un appareil nettoyeur de surface immergée dans un liquide, telle qu'une surface formée par les parois d'un bassin, notamment d'une piscine. Il s'agit notamment d'un robot mobile de nettoyage de piscine. Un tel robot de nettoyage réalise ledit nettoyage en parcourant le fond et les parois du bassin de la piscine, en brossant ces parois, et en aspirant les débris vers un filtre. On désigne par débris toutes les particules présentes au sein du bassin, telles que morceaux de feuilles, microalgues, etc., ces débris étant normalement déposés au fond du bassin ou collés sur les parois latérales de celui-ci.

Le plus couramment, le robot est alimenté en énergie par un câble électrique reliant le robot à une unité extérieure de commande et d'alimentation.

On connaît, par exemple, dans ce domaine, les brevets EP 2 584 118, FR 2 925 557 et 2 925 551, qui visent un appareil nettoyeur de surface immergée à dispositif de filtrage démontable. De tels dispositifs comprennent un corps, des organes d'entraînement dudit corps sur la surface immergée, une chambre de filtration ménagée au sein du corps et comportant une entrée de liquide, une sortie de liquide, un circuit hydraulique de circulation de liquide entre l'entrée et la sortie à travers un dispositif de filtrage. Dans ces brevets, le dispositif de filtrage est amovible pour permettre de vider les feuilles et autres débris sans devoir retourner l'appareil de nettoyage.

Ces appareils disposent de programmes automatiques de nettoyage du fond du bassin et éventuellement des parois latérales du bassin. Un tel programme détermine un nettoyage de la piscine en un temps prédéterminé, par exemple d'une heure et demie. Généralement, le robot est retiré de l'eau par l'utilisateur à la fin du cycle ou à intervalles réguliers, lorsque le filtre est trop plein de particules (feuilles, microparticules etc.), pour être nettoyé. Dans les modèles récents, l'unité extérieure de commande et d'alimentation du robot émet un signal lumineux lorsque cette opération de nettoyage du filtre doit être réalisée.

Dans la plupart des modèles courants de robot de nettoyage de piscine, le nettoyage du filtre oblige l'utilisateur à extraire le filtre du robot, puis à vider celui-ci et à le laver à grande eau. Ces opérations entrainent le plus souvent pour l'utilisateur le contact avec les boues de filtration, ce qui est désagréable et peu hygiénique.

L'invention a notamment pour but de remédier à certains de ces inconvénients.

L'invention vise également un appareil de nettoyage de piscine, dont le nettoyage du filtre soit très simplifié.

L'invention vise également un appareil de nettoyage de piscine dont la consommation d'énergie soit réduite.

### Exposé de l'invention

L'invention vise sous un premier aspect un appareil de nettoyage de piscine comprenant :
a. une poignée d'extraction d'un filtre, mobile entre une première position et une seconde position ;
b. des moyens de retenue de la poignée d'extraction dans la première position, et
c. des moyens pour solliciter la poignée d'extraction vers la seconde position.

On appelle ici "appareil de nettoyage de piscine" un appareil pour le nettoyage d'une surface immergée, c'est-à-dire typiquement un appareil, mobile au sein ou au fond d'un bassin de piscine, et adapté à effectuer la collecte et la filtration de débris déposés sur une paroi. Un tel appareil est communément connu sous le nom de robot de nettoyage de piscine, lorsqu'il comporte des moyens de gestion automatisée des déplacements au fond et sur les parois de la piscine pour couvrir toute la surface à nettoyer.

On nomme ici par abus de langage "liquide" le mélange d'eau et de débris en suspension dans la piscine ou dans le circuit de circulation de fluide au sein de l'appareil de nettoyage.

Avantageusement, la poignée est directement ou indirectement fixée à la partie supérieure du corps.

L'appareil comprend, dans un mode particulier de réalisation, un corps comportant une partie supérieure présentant un évidement tel que, dans la première position, au moins une partie de la poignée s'adapte dans ledit évidement.

De la sorte, l'appareil de nettoyage voit son profil hydrodynamique amélioré lorsque la poignée est retenue dans la première position, et consomme donc moins d'énergie pour se mouvoir.

Par ailleurs, dans cette position, un utilisateur ne peut exercer une traction sur la poignée, ce qui permet d'empêcher une extraction intempestive, par exemple du filtre à débris alors que l'unité de nettoyage est en fonctionnement.

Dans un mode particulier de réalisation, le moyen de retenue est configuré pour être déplacé manuellement de manière à libérer la poignée de la première position.

Dans un autre mode de réalisation, éventuellement utilisé en conjonction et destiné à réduire le risque d'utilisation inadéquate, le moyen de retenue comporte un moyen de blocage automatique selon l'état de l'unité de nettoyage.

Dans un mode particulier de réalisation, la poignée tourne d'environ quatre-vingt dix degrés de la première position à la seconde position. De la sorte, ladite poignée devient parfaitement aisée de prise en main et l'effort d'extraction du filtre se fait perpendiculairement au plan initial de la poignée.

Dans un mode particulier de réalisation, l'appareil de nettoyage de piscine comporte en outre un corps et un filtre à débris, au moins une partie du filtre à débris étant positionnée dans une chambre du corps lorsque l'unité de nettoyage est en cours d'utilisation et le panier de filtration pouvant être retiré de son logement au sein du corps de l'unité de nettoyage, en tirant sur la poignée lorsque la poignée est dans la seconde position. Ce mode de réalisation correspond au cas d'utilisation d'une telle poignée escamotable pour l'insertion et l'extraction du filtre à débris.

Dans ce cas, dans un mode particulier de réalisation, lorsque la poignée est retenue dans la première position, le panier de filtration est fixé à l'intérieur de la chambre et, lorsque la poignée est dans la seconde position, le panier de filtration est libéré de la chambre.

Dans un mode particulier de réalisation, la poignée s'étend sensiblement selon la largeur du corps.

Le moyen de sollicitation comprend au moins un ressort, par exemple un ressort de torsion.

L'appareil de nettoyage de piscine comprend avantageusement, (a) un corps, (b) des moyens pour déplacer le corps à l'intérieur d'une piscine, et (c) un moteur pour entraîner les moyens de déplacement.

Il est aussi décrit un appareil de nettoyage de piscine, qui ne fait pas partie de la présente invention. Cet appareil de nettoyage comprenant :
a. un corps;
b. un filtre à débris, dont au moins une partie est disposée à l'intérieur du corps;
c. un indicateur, mobile d'une première position à une seconde position, l'indicateur étant visible de l'extérieur du corps lorsqu'il est dans la seconde position, et
d. des moyens pour solliciter l'indicateur vers la deuxième position lorsque le filtre à débris contient une quantité prédéterminée de débris.

Il est aussi décrit un appareil de nettoyage de piscine, qui ne fait pas partie de la présente invention. Cet appareil de nettoyage comprenant :
- une unité de nettoyage destinée à être immergée dans la piscine,
- au moins un circuit de filtration de liquide entre au moins une entrée de liquide et au moins une sortie de liquide, à travers une chambre de filtration, extractible du corps de l'unité de nettoyage.

L'unité de nettoyage comprend avantageusement :
- des moyens de forcer une circulation d'eau entre l'entrée d'eau et la sortie d'eau au travers du circuit de filtration,
- des moyens de commande des mouvements de l'unité de nettoyage.

Le circuit de filtration comprend au moins une chambre de filtration, extractible du corps de l'unité de nettoyage, comprenant :
- un couvercle,
- un panier de filtration.

Le couvercle comporte des moyens débrayables de solidarisation au panier de filtration et des moyens de verrouillage de la chambre de filtration au corps de l'unité de nettoyage. Ces moyens de verrouillage sont débrayables et provoquent, lorsqu'ils sont débrayés, c'est-à-dire en pratique lorsque le filtre est sale, le déploiement d'une poignée d'extraction de la chambre de filtration et sa sollicitation jusqu'à une position prédéterminée.

De la sorte, lorsque l'utilisateur vient retirer le panier de filtration de l'appareil de nettoyage de piscine, il n'a pas à se salir les mains au contact des feuilles ou débris contenus dans le panier de filtration.

Avantageusement, le panier de filtration et le couvercle sont extraits de l'appareil par extraction par le haut hors du corps de l'unité de nettoyage.

De cette façon, le panier de filtration est extractible par le dessus de l'appareil. Ainsi un utilisateur n'a pas besoin de retourner ledit appareil pour extraire le panier de filtration. Le couvercle forme donc une partie supérieure du corps de l'appareil.

Il est aussi décrit un appareil nettoyeur de surface immergée caractérisé en combinaison par tout ou partie des caractéristiques mentionnées ci-dessus ou ci-après.

### Présentation des figures

Les caractéristiques et avantages de l'invention seront mieux appréciés grâce à la description qui suit, description qui expose les caractéristiques de l'invention au travers d'un exemple non limitatif d'application.

La description s'appuie sur les figures annexées dans lesquelles :
La figure 1 illustre une vue en perspective d'un appareil de piscine mettant en oeuvre un système de filtration tel qu'exposé,
La figure 2 illustre une vue en coupe du même appareil selon un plan vertical longitudinal,
Les figures 3 et 4 sont des vues en perspective d'un panier de filtration adapté à l'appareil de la figure 1,
Les figures 5 et 6 sont des vues en perspective d'un panier de filtration adapté à l'appareil de la figure 1 avec un couvercle comportant une poignée d'extraction en une position déployée,
Les figures 7 et 8 sont des vues de dessus schématisée d'un même panier avec et sans couvercle,
Les figures 9 et 10 sont des vues de côté de ce même panier de filtration avec et sans couvercle,
La figure 11 est une vue en détail de la poignée sur le couvercle du même panier,
La figure 12 est une vue éclatée du même appareil de piscine.

### Description détaillée d'un mode de réalisation de l'invention

L'invention trouve sa place au sein d'un environnement technique de piscine, par exemple une piscine enterrée de type familial.

Un appareil nettoyeur de surface immergée comporte, dans le présent exemple de réalisation non limitatif, une unité de nettoyage, appelée plus loin robot de nettoyage de piscine, et une unité d'alimentation et de commande dudit robot de nettoyage de piscine.

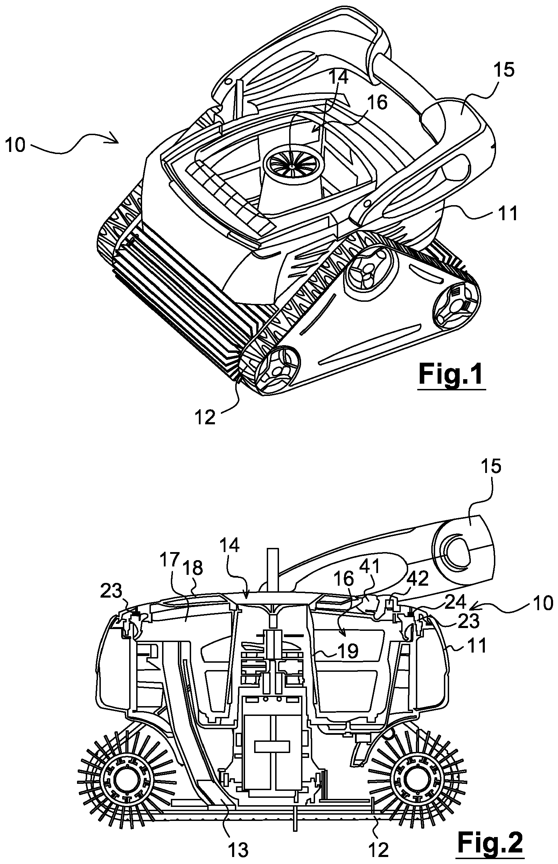

L'unité de nettoyage est représentée selon un mode de réalisation donné ici à titre d'exemple, en figures 1 et 2.

Le robot de nettoyage de piscine **10** comprend un corps **11** et un dispositif d'entraînement et de guidage comprenant des organes d'entraînement et de guidage **12** du corps sur une surface immergée. Dans le présent exemple non limitatif, ces organes d'entrainement et de guidage sont constitués de roues ou de chenilles disposées de façon latérale au corps (voir figure 1).

Le robot de nettoyage de piscine 10 comprend en outre un moteur entraînant lesdits organes d'entraînement et de guidage, ledit moteur étant alimenté, dans le présent exemple de réalisation, via une carte embarquée.

On définit pour la suite de la description un repère XᵣYᵣZᵣ relatif à ce robot de nettoyage 10, dans lequel :
- un axe longitudinal Xᵣ est défini comme l'axe de déplacement du robot de nettoyage 10 lorsque les roues de déplacement 12 sont commandées à se mouvoir de façon identique,
- un axe transversal Yᵣ est défini comme perpendiculaire à l'axe longitudinal Xᵣ, et situé dans un plan parallèle au plan d'appui des roues de déplacement 12 du robot de nettoyage 10, cet axe latéral Yᵣ étant ainsi parallèle à l'axe de rotation des roues,
- un axe vertical Zᵣ est défini comme perpendiculaire aux deux autres axes.

Les notions d'avant, arrière, gauche, droite, haut, bas, supérieur, inférieur, etc. relatives au robot de nettoyage sont définies par rapport à ce repère XᵣYᵣZᵣ.

Le robot de nettoyage de piscine 10 présente un circuit de filtration d'eau comportant au moins une entrée de liquide **13** et une sortie de liquide **14.** L'entrée de liquide 13 est, dans le présent exemple non limitatif, située à la base du corps 11 (en d'autres termes sous celui-ci, lorsque le robot de nettoyage de piscine 10 est posé dans sa position de fonctionnement normale au fond de la piscine), c'est-à-dire immédiatement en regard d'une surface immergée sur laquelle se déplace le robot de nettoyage de piscine 10 afin de pouvoir aspirer les débris accumulés sur ladite surface immergée. La sortie de liquide 14 se situe sur le dessus du robot de nettoyage de piscine 10. Dans le présent exemple de réalisation, la sortie de liquide 14 se fait dans une direction sensiblement perpendiculaire au plan de guidage, c'est-à-dire verticalement si le robot de nettoyage de piscine 10 repose sur le fond de la piscine.

Le circuit de filtration d'eau relie l'entrée de liquide 13 à la sortie de liquide 14. Le circuit de filtration d'eau est adapté pour pouvoir assurer une circulation de liquide depuis l'entrée de liquide 13 vers la sortie de liquide 14. Le robot de nettoyage de piscine 10 comprend à cet effet une pompe comprenant un moteur et une hélice, ledit moteur entraînant l'hélice en rotation, ladite hélice étant disposée dans le circuit hydraulique.

Le robot de nettoyage de piscine 10 est alimenté en énergie au moyen d'un câble souple étanche. Dans le présent exemple, ce câble souple est attaché au corps du robot de nettoyage de piscine 10 en sa partie supérieure. Ce câble souple est relié, en son autre extrémité, à l'unité d'alimentation (non illustrée sur la figure 1), disposée à l'extérieur du bassin, cette unité d'alimentation étant elle-même reliée au courant électrique sur le secteur.

Le robot de nettoyage 10 comporte en outre, dans le présent exemple, une poignée de préhension **15** adaptée à permettre à un utilisateur de sortir le robot de l'eau, notamment lorsqu'il faut nettoyer le filtre. Dans le présent exemple de réalisation, la poignée de préhension 15 est mobile entre une position déployée, et une position repliée le long du corps de l'unité de nettoyage.

Dans une variante de ce mode de réalisation, un ressort de rappel de type ressort de torsion est disposé dans l'axe de la poignée de préhension 15, et vient solliciter la poignée de préhension vers sa position repliée. De cette manière, la résistance hydrodynamique de l'unité de nettoyage lors de ses mouvements dans l'eau est réduite, et la consommation électrique de l'appareil s'en trouve donc réduite.

Dans un mode particulier de réalisation, le robot de nettoyage comporte des moyens permettant le vidage rapide de l'eau contenue dans sa chambre interne de filtration lorsqu'il est extrait de l'eau. De tels dispositifs sont par exemple décrits dans la demande de brevet EP 2 235 291 de la demanderesse.

Le robot de nettoyage de piscine 10 comprend une chambre de filtration **16** interposée, sur le circuit de filtration d'eau, entre l'entrée de liquide 13 et la sortie de liquide 14. La chambre de filtration est en particulier alimentée en liquide via au moins un canal amont reliant l'entrée de liquide 13 à la chambre de filtration 8. Chaque canal amont débouche dans la chambre de filtration 16 à travers une ouverture d'alimentation. L'ouverture d'alimentation est dotée ici d'un clapet anti-retour.

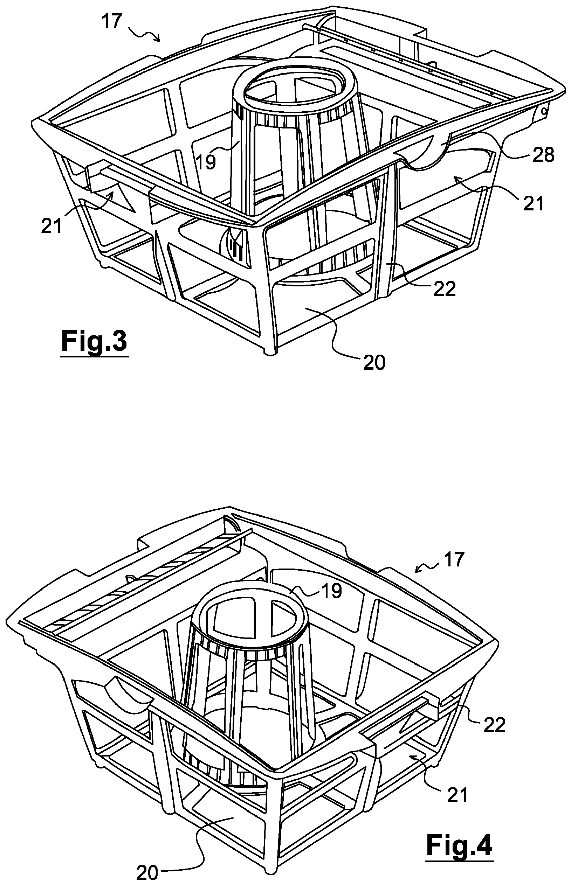

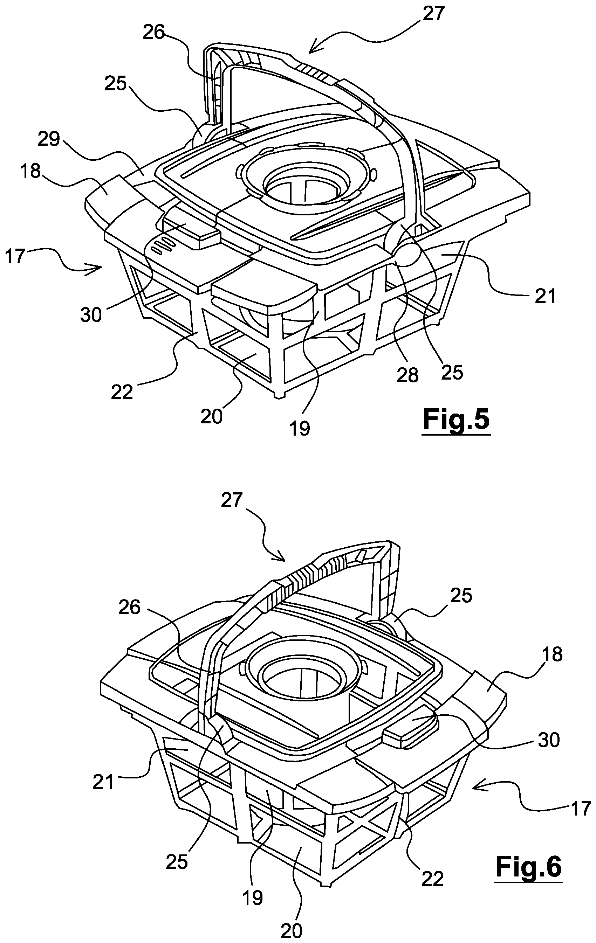

Dans le présent exemple de réalisation, la chambre de filtration 16 comprend un panier de filtration **17** illustré notamment par les figures 3 et 4, et un couvercle **18**, illustré notamment par les figures 5 et 6, formant la paroi supérieure de la chambre de filtration 16 et formant une partie intégrante de la surface extérieure du corps 11 de l'unité de nettoyage 10. Ce couvercle 18 amovible permet à un utilisateur d'accéder au panier de filtration 17 de la chambre de filtration 16, pour nettoyer le filtre lorsque cela se révèle nécessaire.

Le panier de filtration 17 forme ici le fond et les parois périphériques extérieures et intérieures de la chambre de filtration 16.

Dans un cas particulier de réalisation, l'hélice entraînant la circulation de l'eau dans le circuit de filtration est disposée selon un axe vertical sensiblement central vis à vis du corps 11 de l'unité de nettoyage. Dans ce cas, la sortie de liquide 14 est située au milieu du couvercle 18. Le panier de filtration 17 comporte en partie centrale, dans cet exemple, une paroi filtrante centrale **19** entourant un carénage de l'hélice.

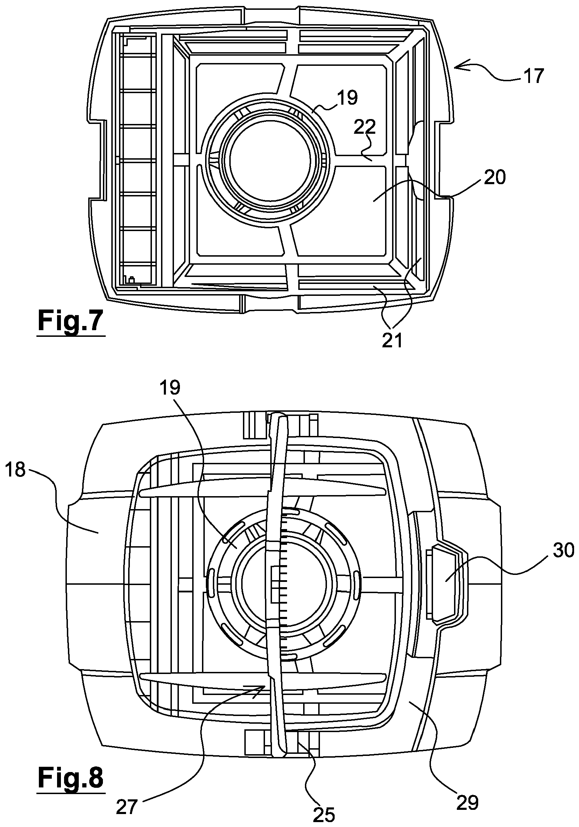

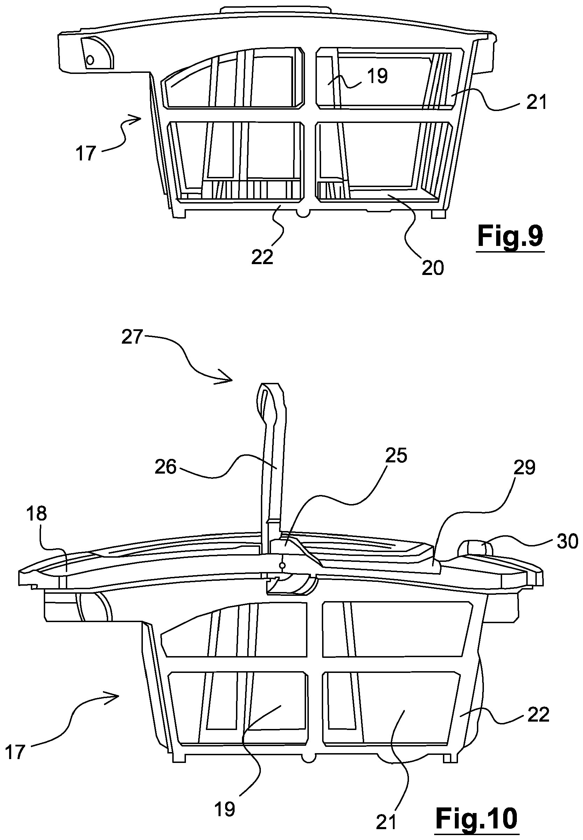

Le panier de filtration 17 présente alors, dans l'exemple non limitatif illustré par les figures 7 et 9, une forme globalement parallélépipédique, avec un évidement de part en part formé par la paroi filtrante centrale, destinée à venir se placer autour du carénage de l'hélice et du moteur électrique. Le panier de filtration 17 comporte, outre la paroi filtrante centrale 19, une paroi filtrante inférieure **20** et des parois filtrantes latérales externes **21,** étant ainsi conformé en parallélépipède rectangle dénué de face supérieure, ladite face étant normalement formée par le couvercle 18, ledit panier de filtration 17 comportant en partie centrale la paroi filtrante centrale 19 orientée selon un axe perpendiculaire à sa face inférieure 20, cet axe étant ici confondu avec l'axe vertical Zᵣ de l'unité de nettoyage 10. Dans le présent exemple de réalisation, la paroi filtrante centrale 19 est de forme tronconique, plus large en partie basse qu'en partie haute (près du couvercle 18).

Dans le présent exemple nullement limitatif de réalisation, le panier de filtration 17 comporte une surface à maille fine formant le filtre proprement dit, attaché par soudure, collage ou tout autre moyen, sur une armature rigide ajourée **22.**

La chambre de filtration 16 est extractible, c'est-à-dire qu'elle peut être extraite du, et introduite dans, le corps 11 de l'appareil. Le corps 11 de l'appareil présente à cet effet un logement dans lequel le panier de filtration 17 peut être inséré, le couvercle 18 venant former une continuité avec la surface extérieure du corps 11 de l'appareil. Le fait que le panier de filtration 17 soit extractible permet de le vider facilement, notamment sans devoir manipuler l'unité de nettoyage en entier.

Le panier de filtration 17 est solidarisé au couvercle 18, de façon amovible afin de faciliter le nettoyage du panier de filtration 17 des débris s'y étant accumulés.

Le couvercle 18 est monté hermétiquement sur le panier de filtration 17 afin d'éviter des fuites de liquide chargé de débris. Dans un exemple non limitatif, le couvercle 18 comporte un rebord périphérique adapté à venir coopérer avec un bord du panier de filtration. De la sorte, les débris restent à l'intérieur du panier de filtration 17. Dans une variante de réalisation, le couvercle 18 comprend un joint périphérique (non illustré sur les figures) venant en appui sur le bord du panier de filtration 17.

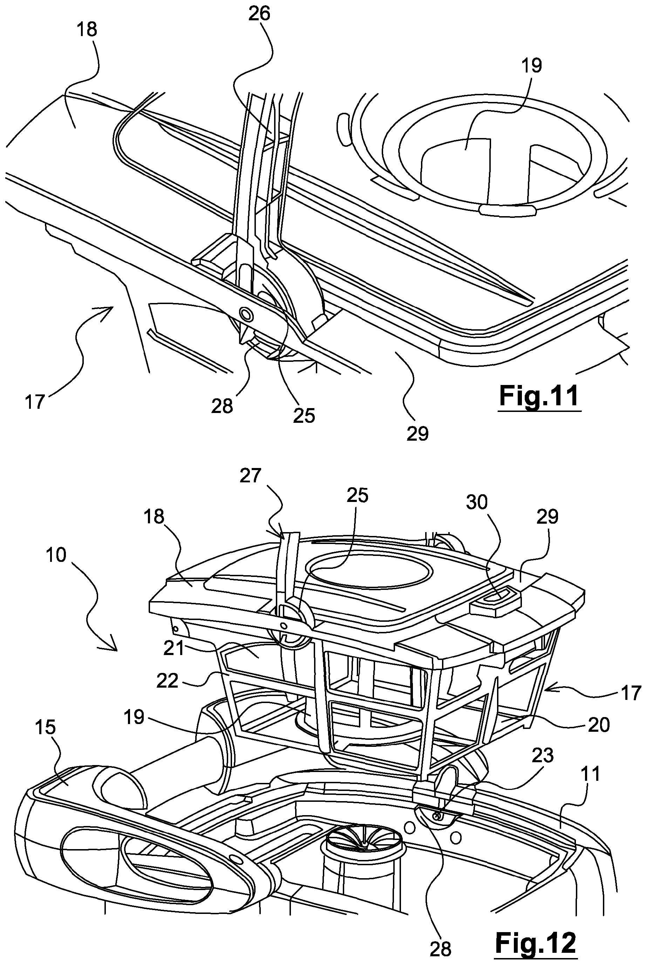

Comme illustrés en figures 10 et 12, le couvercle 18 forme une portion supérieure de la paroi externe du corps 11 de l'unité de nettoyage 10, lorsque le panier de filtration 17 est inséré dans le logement de ladite unité de nettoyage. Le couvercle 18 présente une forme correspondante à la forme latérale du panier de filtration 17, ladite forme étant éventuellement percée en son centre afin de ménager un passage au carénage d'hélice formant, par son extrémité haute, la sortie de liquide 14.

Dans le présent mode de réalisation illustré en figure 12, le couvercle 18 comporte un moyen de verrouillage sur le dessus du panier de filtration 17, sous la forme de deux ergots **23** actionnables manuellement, disposés sous les bords longitudinaux dudit couvercle 18 (voir figure 12) et comportant des moyens de rappel **24.** Ces ergots 23 viennent se fermer sur des logements ménagés dans les bords longitudinaux hauts de l'armature rigide 22 du panier de filtration 17. Les moyens de rappel 24 sont, par exemple mais non limitativement, de type ressort de torsion.

De la sorte, en appuyant simultanément sur les deux ergots 23, un utilisateur sépare le panier de filtration 17 du couvercle 18. Il peut alors saisir l'armature rigide 22 du panier de filtration 17 par ses bords longitudinaux, par exemple au niveau des logements correspondants aux ergots 23, et manipuler ledit panier de filtration sans devoir entrer en contact avec les boues de filtration, localisées au niveau de la surface filtrante. L'utilisateur peut ainsi retourner le panier de filtration 17, le vider, puis le laver à grande eau toujours sans entrer en contact avec les boues de filtration.

Le couvercle 18 comporte également un moyen de verrouillage sur le corps 11, sous la forme de deux glissières latérales **25** (voir figures 5 et 6) configurées sous forme de conduits en arc de cercle, ces glissières 25 étant solidarisées aux bras **26** d'une poignée d'extraction **27**, mobile entre une position sensiblement horizontale (plan XᵣYᵣ) et une position sensiblement verticale (plan YᵣZᵣ). Les deux glissières latérales 25 sont disposées de part et d'autre du couvercle 18 (voir figures 3 et 4)

Ces deux glissières latérales 25 viennent coopérer avec deux évidements en demi-cercle dotés chacun d'un ergot central, lesdits évidements étant ménagés dans les bords latéraux supérieurs du corps 11. Elles correspondent également avec deux bords latéraux semi-cylindriques **28** du panier de filtration 17. De la sorte, lorsque le couvercle 18 est disposé sur le panier de filtration 17 et sur le corps 11, les glissières latérales 25 du couvercle 18 se positionnent sur les bords semi-cylindriques 28 du panier de filtration 17, ceux-ci venant s'appuyer sur les évidements en demi-cercle du corps 11 comme visible en figures 11 et 12.

On comprend que l'ergot central vient se glisser dans le conduit en arc de cercle de la glissière latérale 25 lui correspondant, et que, selon que la poignée d'extraction 27 est disposée verticalement ou horizontalement, l'ergot central est libéré ou au contraire bloqué dans le conduit en arc de cercle. La chambre de filtration 16 comprenant le panier de filtration 17 et le couvercle 18 est ainsi solidarisée ou libérée du corps 11 de l'unité de nettoyage 10, selon que la poignée d'extraction 27 est en position horizontale ou verticale.

La poignée d'extraction 27, lorsqu'elle est en position horizontale, vient s'adapter et s'insérer au moins partiellement dans un évidement **29** (voir figures 5, 6, 10) prévu à cet effet dans la surface supérieure du couvercle 17. Dans cette position, la poignée d'extraction 27 est retenue en place sur le couvercle 18 par un dispositif de retenue **30** (voir figures 8 et 10). Ce dispositif de retenue 30 prend ici la forme d'un bouton large, actionnable manuellement, mobile en rotation autour d'un axe transversal (axe Yᵣ) entre une première position et une seconde position, rappelé vers la première position par un ressort de torsion, et dont une partie de la surface inférieure centrale vient alors se placer au dessus d'une partie correspondante de la surface de la poignée d'extraction 27, bloquant ainsi celle-ci.

Un ressort de torsion (non visible sur les figures) est monté entre le couvercle 18 et la poignée d'extraction 27, au niveau des points d'articulation des bras 26 de la poignée d'extraction 27. Ce ressort de torsion est configuré pour solliciter la poignée d'extraction vers sa position verticale, tout en permettant à un utilisateur de force normale de repousser aisément ladite poignée d'extraction 27 vers sa position horizontale.

De la sorte, lorsque la poignée mobile 27 est amenée en position verticale, le couvercle 18 et le panier de filtration 17 peuvent être extraits du corps 11 par l'utilisateur. La poignée d'extraction 27 est verrouillée par le dispositif de retenue 30 sur le couvercle 18 lorsque le panier de filtration 17 est inséré dans le corps 11, de manière à éviter que le panier de filtration 17 ne risque de se déplacer lorsque l'unité de nettoyage 10 est en opération.

### Variantes

Dans une variante de réalisation, la poignée de préhension 15 est encore mobile entre une position déployée, et une position repliée le long du corps de l'unité de nettoyage.

Un ressort de rappel de type ressort de torsion est disposé dans l'axe de la poignée de préhension 15, et vient solliciter la poignée de préhension vers sa position déployée. Lorsqu'elle est positionnée en configuration repliée (non illustrée sur les figures), ladite poignée de préhension 15 est maintenue en place par un moyen de retenue (également non illustré) actionnable manuellement.

Dans une variante de réalisation, la poignée d'extraction 27 est mobile entre une première position et une seconde position pour tout besoin de service comme par exemple pour changer une pièce usée.

Dans une autre variante de réalisation, l'unité de nettoyage de piscine 10 comprend un indicateur, mobile d'une première position à une seconde position, l'indicateur étant visible de l'extérieur du corps 11 lorsqu'il est dans la seconde position, et des moyens pour solliciter l'indicateur vers la deuxième position lorsque le filtre à débris contient une quantité prédéterminée de débris.

Dans une autre variante de réalisation, l'unité de nettoyage de piscine 10 comprend une poignée, mobile d'une première position à une seconde position, et des moyens pour solliciter la poignée vers la deuxième position, ces moyens étant par activés par exemple par un détecteur de niveau de remplissage du filtre à débris, ou par un détecteur de niveau de batterie pour le cas d'un robot de nettoyage alimenté par batteries. De la sorte, la position haute de la poignée est un indicateur visuel très visible pour l'utilisateur d'un besoin de maintenance de l'unité de nettoyage.

## Revendications

1. Appareil de nettoyage de piscine comprenant :
a. une poignée d'extraction (27) d'un filtre, mobile entre une première position et une seconde position, **caractérisé en ce que** l'appareil comprend :
b. des moyens de retenue (30) de la poignée d'extraction dans la première position, et
c. des moyens pour solliciter la poignée d'extraction vers la seconde position.

2. Appareil de nettoyage de piscine selon la revendication 1, comprenant en outre un corps (11) comportant une partie supérieure présentant un évidement (29) tel que, dans la première position, au moins une partie de la poignée (27) s'adapte dans ledit évidement.

3. Appareil de nettoyage de piscine selon la revendication 1, dans lequel les moyens de retenue (30) sont configurés pour être déplacés manuellement de manière à libérer la poignée (27) de la première position.

4. Appareil de nettoyage de piscine selon la revendication 1, dans laquelle la poignée (27) tourne d'environ quatre-vingt dix degrés de la première position à la seconde position.

5. Appareil de nettoyage de piscine selon la revendication 2, dans lequel la poignée (27) est directement ou indirectement fixée à la partie supérieure du corps (11).

6. Appareil de nettoyage de piscine selon la revendication 1, comprenant en outre un corps (11) et un filtre à débris, (a) au moins une partie du filtre à débris étant positionnée dans une chambre du corps (11) lorsque l'unité de nettoyage est en cours d'utilisation et, (b) un panier de filtration (17) pouvant être retiré de son logement au sein du corps de l'unité de nettoyage, en tirant sur la poignée (27) lorsque la poignée est dans la seconde position.

7. Appareil de nettoyage de piscine selon la revendication 6, dans lequel, lorsque la poignée (27) est retenue dans la première position, le panier de filtration (17) est fixé à l'intérieur de la chambre et lorsque la poignée (27) est dans la seconde position, le panier de filtration (17) est libéré de la chambre.

8. Appareil de nettoyage de piscine selon la revendication 1, tel que la poignée (27) s'étende sensiblement selon la largeur du corps (11).

9. Appareil de nettoyage de piscine selon la revendication 1, dans lequel le moyen de sollicitation comprend au moins un ressort.

10. Appareil de nettoyage de piscine selon la revendication 9, dans lequel le ressort est un ressort de torsion.

11. Appareil de nettoyage de piscine selon la revendication 1, comprenant en outre (a) un corps (11), (b) des moyens (12) pour déplacer le corps à l'intérieur d'une piscine, et (c) un moteur pour entraîner les moyens de déplacement.

## Patentansprüche

1. Schwimmbeckenreinigungsvorrichtung, umfassend:
a. einen Griff zum Extrahieren (27) eines Filters, zwischen einer ersten Position und einer zweiten Position beweglich, **dadurch gekennzeichnet, dass** die Vorrichtung umfasst:
b. Mittel zum Zurückhalten (30) des Griffes zum Extrahieren in der ersten Position, und
c. Mittel zum Zwingen des Griffes zum Extrahieren in die zweite Position.

2. Schwimmbeckenreinigungsvorrichtung nach Anspruch 1, weiter einen Körper (11) umfassend, der einen oberen Teil beinhaltet, der eine derartige Ausnehmung (29) aufweist, dass sich in der ersten Position mindestens ein Teil des Griffes (27) in der Ausnehmung anpasst.

3. Schwimmbeckenreinigungsvorrichtung nach Anspruch 1, wobei die Mittel zum Zurückhalten (30) konfiguriert sind, um von Hand derart verschoben zu werden, um den Griff (27) aus der ersten Position freizugeben.

4. Schwimmbeckenreinigungsvorrichtung nach Anspruch 1, wobei sich der Griff (27) um etwa neunzig Grad aus der ersten Position in die zweite Position dreht.

5. Schwimmbeckenreinigungsvorrichtung nach Anspruch 2, wobei der Griff (27) direkt oder indirekt am oberen Teil des Körpers (11) fixiert ist.

6. Schwimmbeckenreinigungsvorrichtung nach Anspruch 1, weiter einen Körper (11) und einen Teilchenfilter umfassend, (a) wobei mindestens ein Teil des Teilchenfilters in einer Kammer des Körpers (11) positioniert ist, wenn die Reinigungseinheit in Betrieb ist, und (b) wobei ein Filterkorb (17) aus seiner Aufnahme innerhalb des Körpers der Reinigungseinheit entnommen werden kann, indem man an dem Griff (27) zieht, wenn der Griff in der zweiten Position ist.

7. Schwimmbeckenreinigungsvorrichtung nach Anspruch 6, wobei, wenn der Griff (27) in der ersten Position zurückgehalten wird, der Filterkorb (17) im Inneren der Kammer fixiert ist, und wenn der Griff (27) in der zweiten Position ist, der Filterkorb (17) aus der Kammer freigegeben wird.

8. Schwimmbeckenreinigungsvorrichtung nach Anspruch 1, derart, dass sich der Griff (27) im Wesentlichen in der Breite des Körpers (11) erstreckt.

9. Schwimmbeckenreinigungsvorrichtung nach Anspruch 1, wobei das Mittel zum Zwingen mindestens eine Feder umfasst.

10. Schwimmbeckenreinigungsvorrichtung nach Anspruch 9, wobei die Feder eine Torsionsfeder ist.

11. Schwimmbeckenreinigungsvorrichtung nach Anspruch 1, weiter (a) einen Körper (11), (b) Mittel (12) zum Verschieben des Körpers im Inneren eines Schwimmbeckens, und (c) einen Motor zum Antreiben der Verschiebemittel umfassend.

## Claims

1. Swimming pool cleaning apparatus comprising:
a. a filter extraction handle (27) that is able to move between a first position and a second position, **characterized in that** the apparatus comprises:
b. means for retaining (30) the extraction handle in the first position, and
c. means for urging the extraction handle towards the second position.

2. Swimming pool cleaning apparatus according to Claim 1, also comprising a body (11) having an upper part that has a recess (29) such that, in the first position, at least a part of the filter extraction handle (27) fits into said recess.

3. Swimming pool cleaning apparatus according to Claim 1, wherein the means for retaining (30) are designed to be moved manually so as to release the handle (27) from the first position.

4. Swimming pool cleaning apparatus according to Claim 1, wherein the handle (27) rotates through about ninety degrees from the first position to the second position.

5. Swimming pool cleaning apparatus according to Claim 2, wherein the handle (27) is fixed directly or indirectly to the upper part of the body (11).

6. Swimming pool cleaning apparatus according to Claim 1, also comprising a body (11) and a debris filter, (a) at least a part of the debris filter being positioned in a chamber of the body (11) when the cleaning apparatus is in use, and (b) a filtration basket (17) being able to be removed from its housing within the body of the cleaning apparatus by pulling on the handle (27) when the handle is in the second position.

7. Swimming pool cleaning apparatus according to Claim 6, wherein, when the filter extraction handle (27) is retained in the first position, the filtration basket (17) is fixed inside the chamber, and when the handle (27) is in the second position, the filtration basket (17) is released from the chamber.

8. Swimming pool cleaning apparatus according to Claim 1, wherein the handle (27) extends approximately along the width of the body (11).

9. Swimming pool cleaning apparatus according to Claim 1, wherein the means for urging comprises at least one spring.

10. Swimming pool cleaning apparatus according to Claim 9, wherein the spring is a torsion spring.

11. Swimming pool cleaning apparatus according to Claim 1, also comprising (a) a body (11), (b) means (12) for moving the body within a swimming pool, and (c) a motor for driving the movement means.
